**Europäisches Patentamt**

**European Patent Office**

**Office européen des brevets**

(11) Publication number: **0 118 214**

**A2**

## EUROPEAN PATENT APPLICATION

(21) Application number: **84300682.6**

(22) Date of filing: **03.02.84**

(51) Int. Cl.³: **H 04 L 27/14**
**H 04 L 27/22**

(30) Priority: **04.02.83 GB 8303144**

(43) Date of publication of application:
**12.09.84 Bulletin 84/37**

(84) Designated Contracting States:
**AT BE CH DE FR IT LI LU NL SE**

(71) Applicant: **McMICHAEL LIMITED**
**Sefton Park Bells Hill**
**Stoke Poges Slough Berkshire, SL2 4HB(GB)**

(72) Inventor: **Turney, Paul Francis**
**57 Severn Crescent**
**Langley Slough, SL3 8UU(GB)**

(74) Representative: **Dolwin, John Davison**
**Central Patent Department The General Electric**
**Company plc Hirst Research Centre East Lane**
**Wembley Middlesex HA9 7PP(GB)**

(54) Demodulators.

(57) A high quality demodulator uses software techniques to recover digital data from an FSK or PSK modulated signal. A Software Costas loop is utilised to convert representative samples of the incoming signal to a baseband signal which is further software processed by a second software loop to provide 'I' and 'Q' output signals with associated timing information. The representative signal samples are derived by Sub Nyquist sampling under control of a microprocessor (100) which provides control values to a digitally controlled oscillator (102). The digitally controlled oscillator (102) controls a sample and hold circuit (103) to select representative signal samples of the in-phase and quadrature phase modulation.

Fig.1.

Croydon Printing Company Ltd.

## Demodulators

The present invention relates to demodulators and more particularly but not exclusively to demodulators for demodulating frequency shift keyed (FSK) and phase shift keyed (PSK) signals which carry digital data.

One form of FSK signalling is known as minimum shift keyed (MSK) or fast frequency shift keyed (FFSK) signalling. MSK signals, in which the frequency difference between the upper frequency and and lower frequency is substantially equal to half the data rate, lead to an economic use of frequency bands but require high quality demodulators to ensure accurate determination of the received data.

Two principal forms of PSK signalling known as bi-phase shift keying (BPSK) and quadrature phase shift keying (QPSK) are commonly used in radio communications and demodulation of these signals is also discussed herein.

In implementing the present invention with respect to MSK signalling use is made of a suppressed carrier synchronisation loop known as a Costas loop. A full description of such a loop appears in the "Proceedings of the IRE" Volume 44, December 1956 at pages 1713 to 1718.

In PSK demodulation a known carrier tracking loop which is described by Spilker J.J. in the book "Digital Communications by Satellite" published by Prentice Hall Inc. of New Jersey at pages 308 to 310, is used. Reference is also made to a digital-transition tracking loop (DTTL), a description of which appears at pages 437 to 443 of the above mentioned book.

In a modification of the apparatus hereinafter described reference is also made to a "long loop configuration" which configuration has been described by Biswas et al in an article entitled "Heterodyne Phase-Locked Loops - Revisted" at pages 1164 to 1170 of the IEEE Transactions on Communications, Volume Com-25, No. 10, October 1977.

Provision of conventional high-quality radio communications receivers for example for decoding MSK signals is often hampered by a lack of available space in which to mount the equipment. This is particularly so when the receiver is used in for example a vehicle, vessel or aircraft.

It is an object of the present invention to provide a high quality demodulator which requires less space than a conventional demodulator of similar quality by using digital demodulation techniques.

According to the present invention in a demodulator for recovering digital data from a frequency shift keyed (FSK) or phase shift keyed (PSK) modulated signal, an incoming signal is applied to an input of a microprocessor which is programmed to subtract a mathematical function representative of the carrier signal from the incoming signal to provide a baseband signal containing the data to be recovered, said microprocessor also being arranged to derive from said baseband signal a value representative of the apparent phase difference between the actual carrier and said mathematical function and to vary said mathematical function in dependance upon said derived value, and said microprocessor is further arranged to recover the digital data from said baseband signal and to derive timing signals from said baseband signal in respect of said recovered data and to provide signals at an output representing the recovered data and the timing relating thereto.

Preferably said microprocessor is arranged to provide signals at two separate outputs said signals representing respectively the data and timing for data (if any) which is in-phase with the carrier signal and the data and timing for data (if any) which is in quadrature phase with the carrier signal.

The in-phase and quadrature phase data and timing may each be in respect of a plurality of independent data channels.

The demodulator may be arranged to demodulate frequency shift keyed (FSK) signals, more particularly MSK signals, or phase shift keyed (PSK) signals, more particularly bi-phase shift keyed (BPSK) or quadrature phase shift keyed (QPSK) signals.

A demodulator in accordance with the invention will now be described by way of example only with reference to the accompanying drawings of which:

Figure 1 is a block schematic diagram of the demodulator;

Figure 2 is a schematic of a part of an algorithm used by the microprocessor of Figure 1 to recover data and timing from an FSK signal;

Figure 3 is a schematic of a part of an algorithm used by the microprocessor of Figure 1 to recover carrier information from an FSK signal;

Figure 4 is a schematic of a part of an algorithm used by the microprocessor of Figure 1 as an alternative to that shown in Figure 3 for recovery of carrier information using sub-Nyquist sampling;

Figure 5A and B show respectively how to assemble Figures 3 and 2 and Figures 4 and 2 to show the complete algorithm used by the microprocessor of Figure 1;

Figure 6 is a block schematic of demodulator phase-locked loops;

Figure 7 shows how to assemble Figures 8 and 9;

Figures 8 and 9 when assembled as shown in

-4-

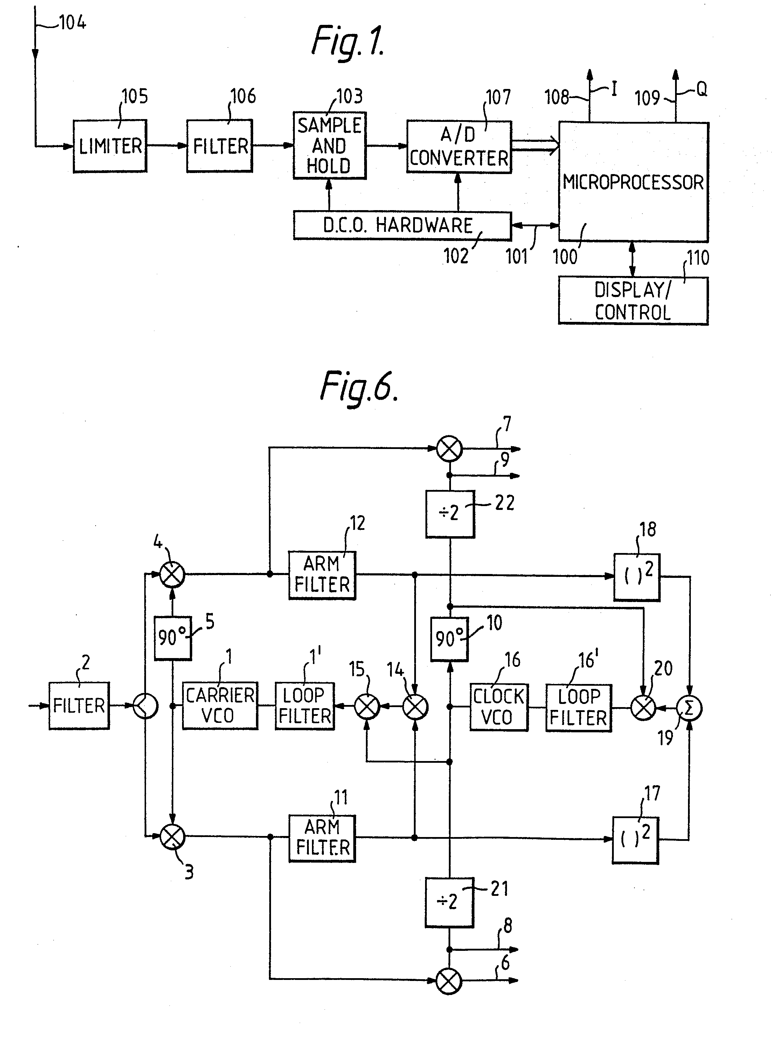

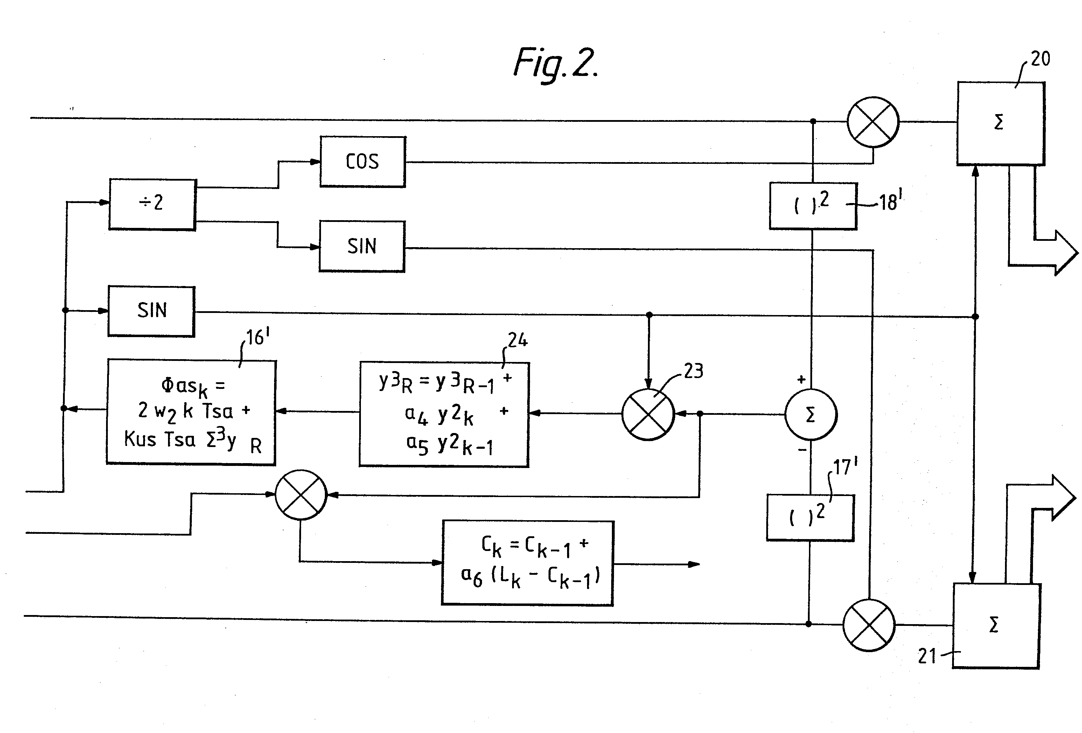

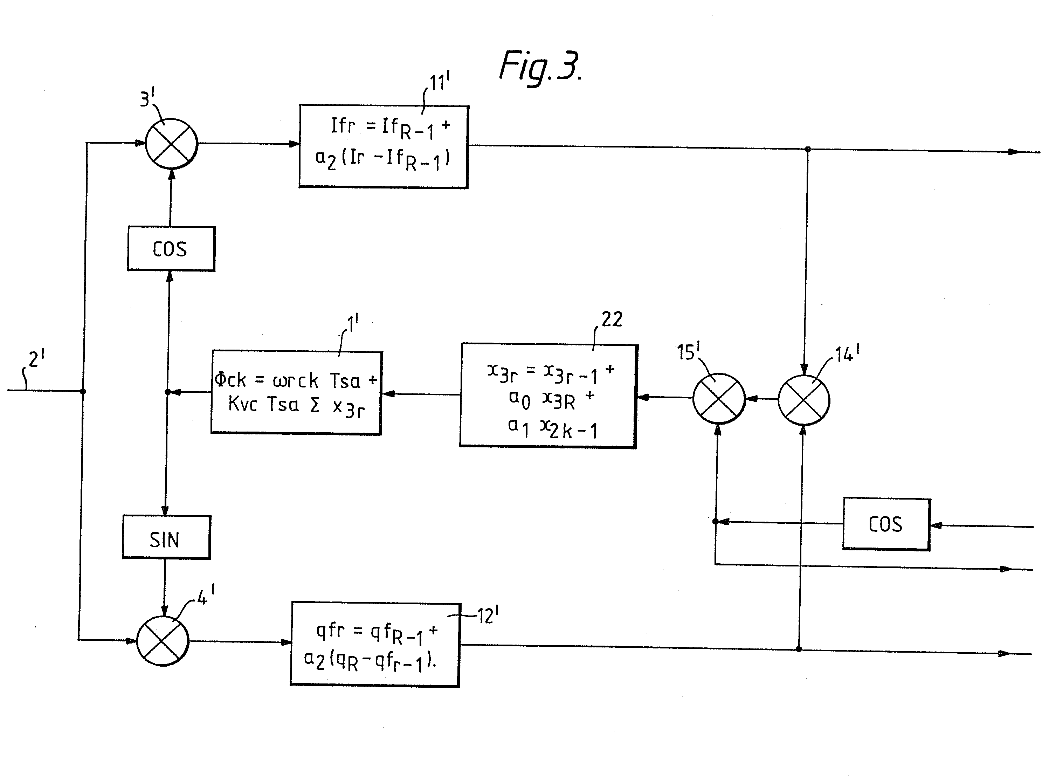

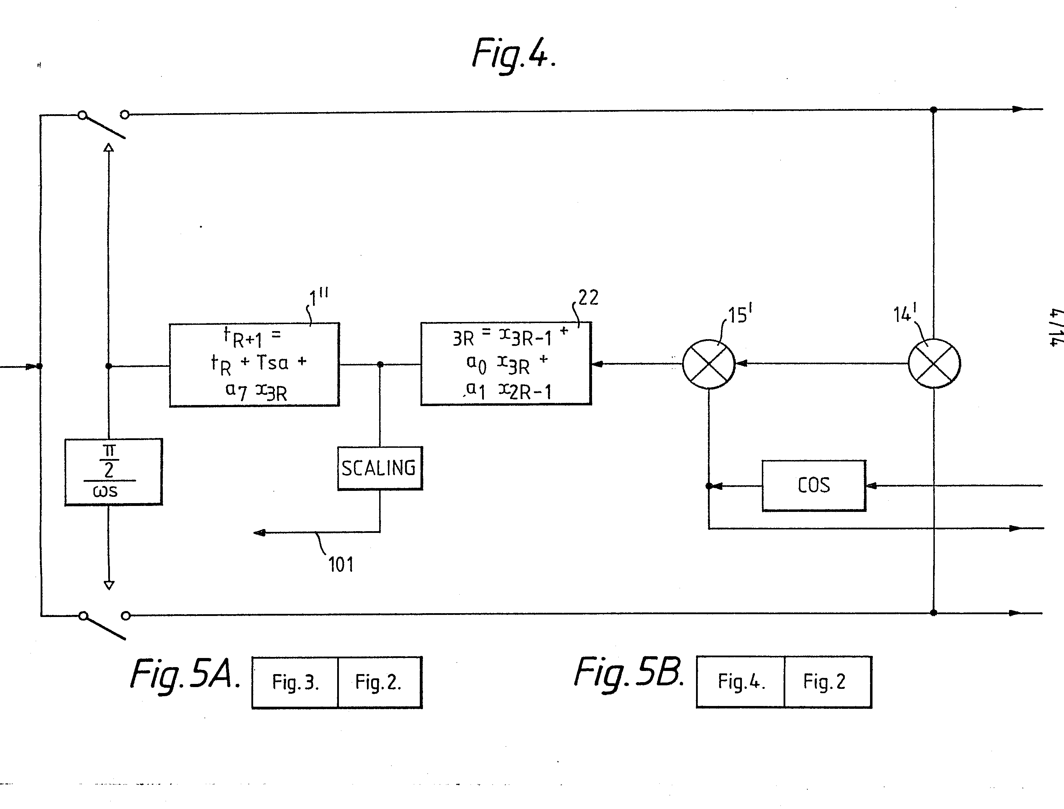

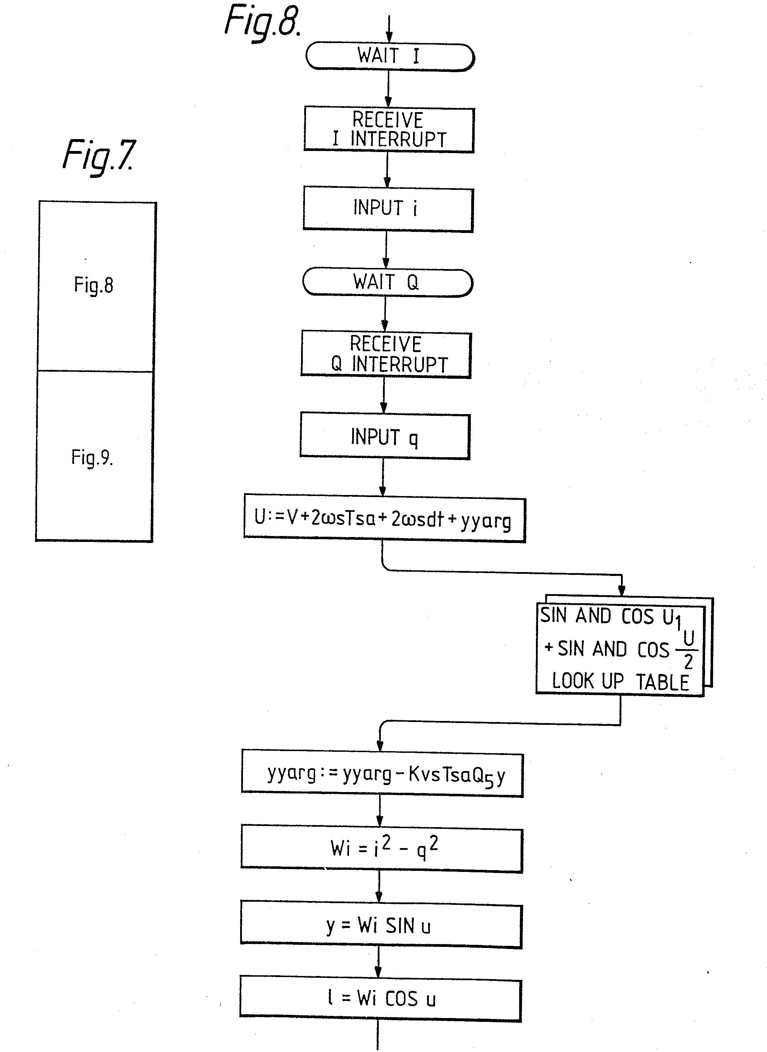

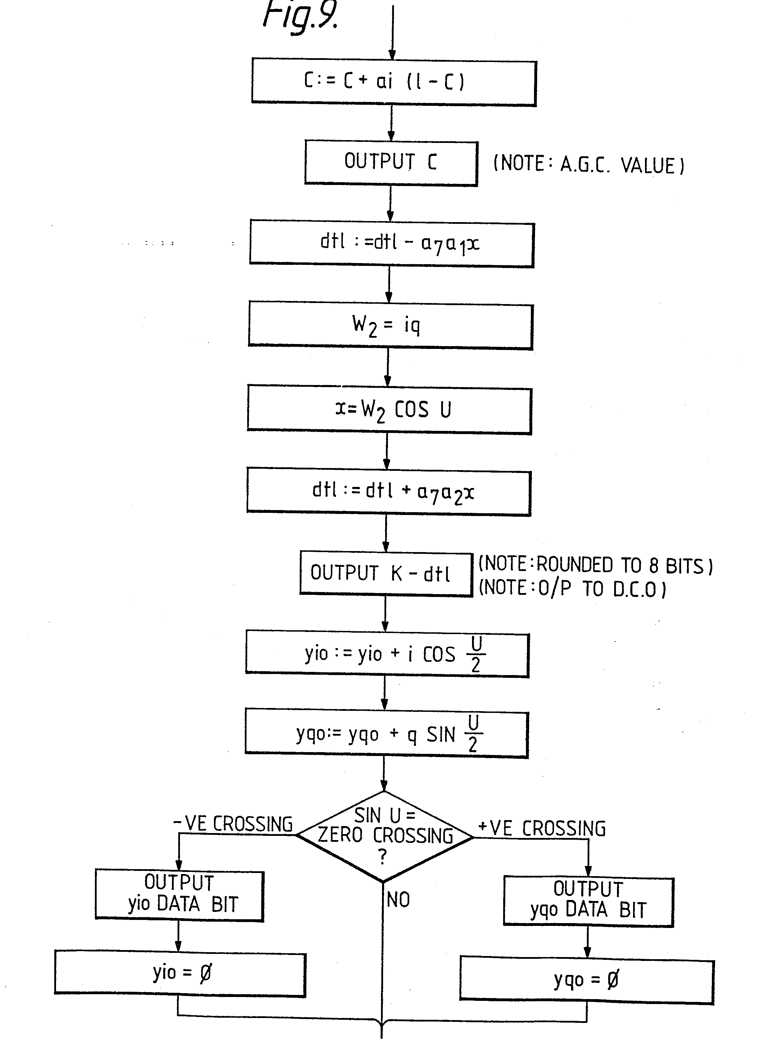

Figure 7 is a flow chart for the program of the microprocessor of Figure 1 when using the algorithm of Figures 4 and 2 when assembled as shown in Figure 5B;

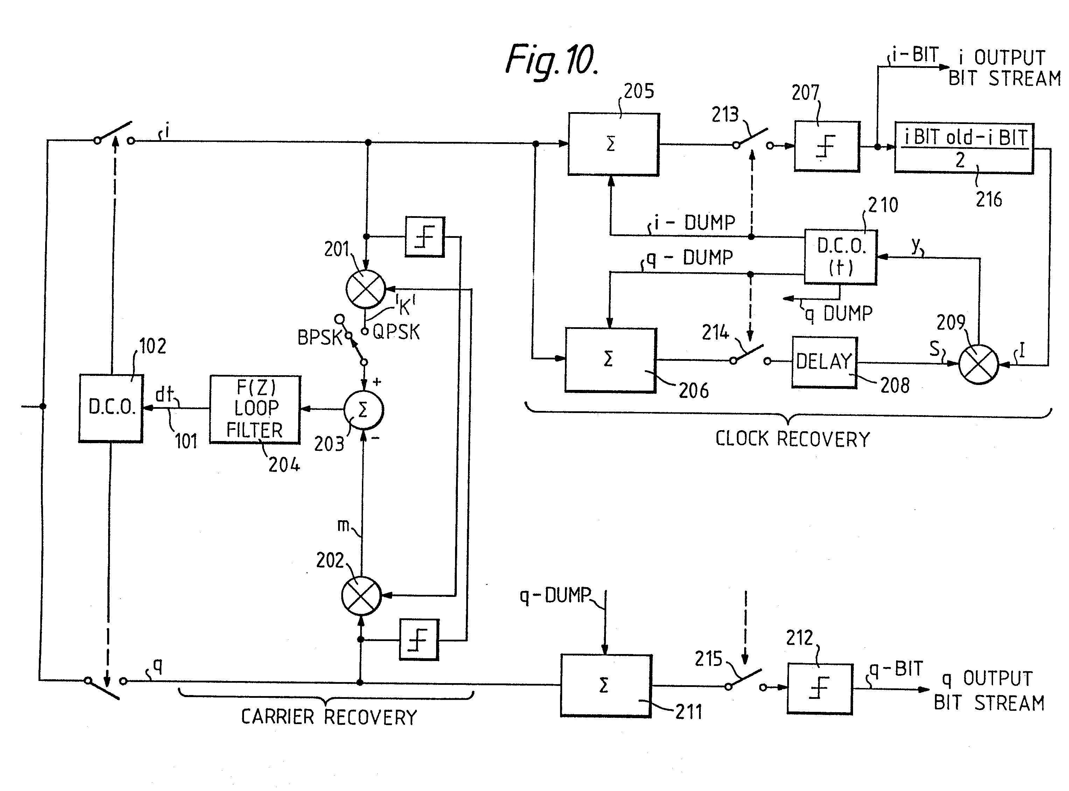

Figure 10 is a schematic diagram of an algorithm used by the microprocessor of Figure 1 to recover data from a PSK signal;

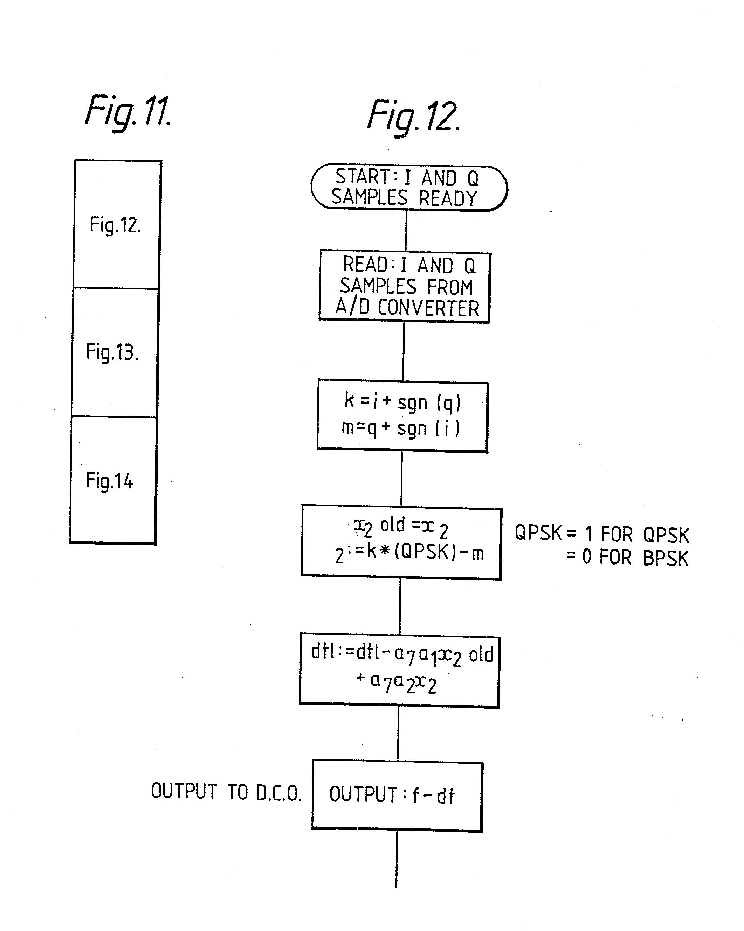

Figure 11 shows how to assemble figures 12 to 14;

Figures 12 to 14 when assembled as shown in Figure 11 is a flow chart for the microprocessor of Figure 1 when using the algorithm of Figure 10;

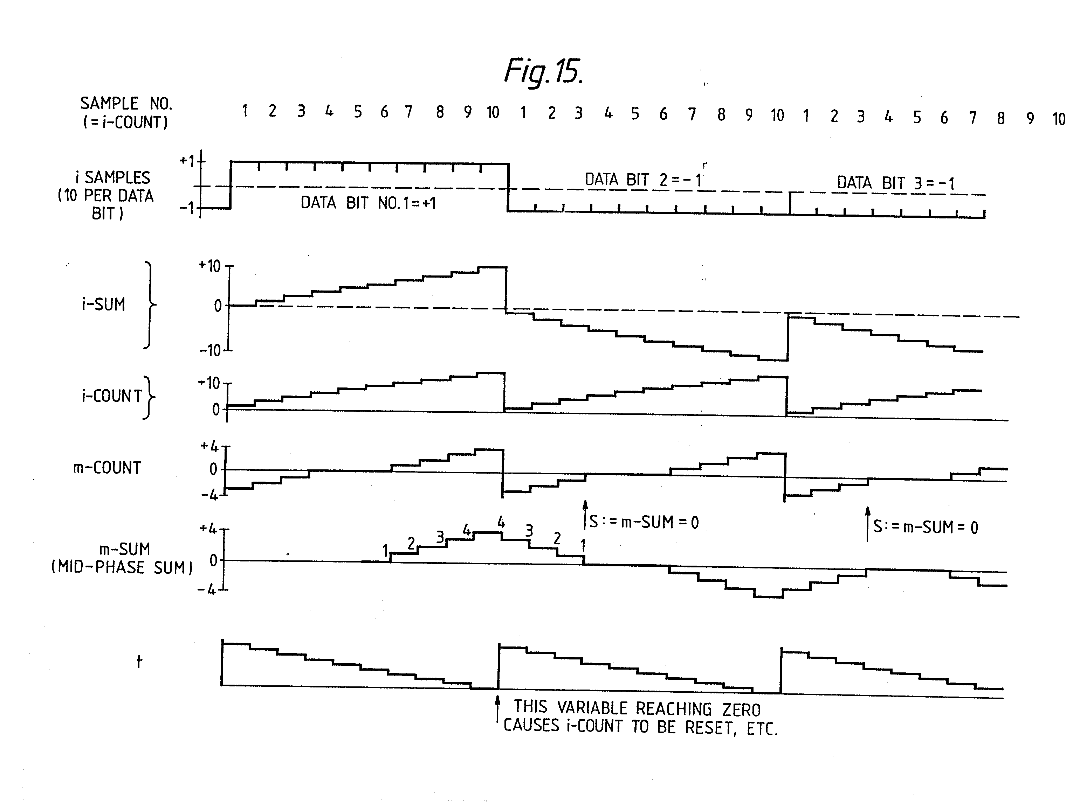

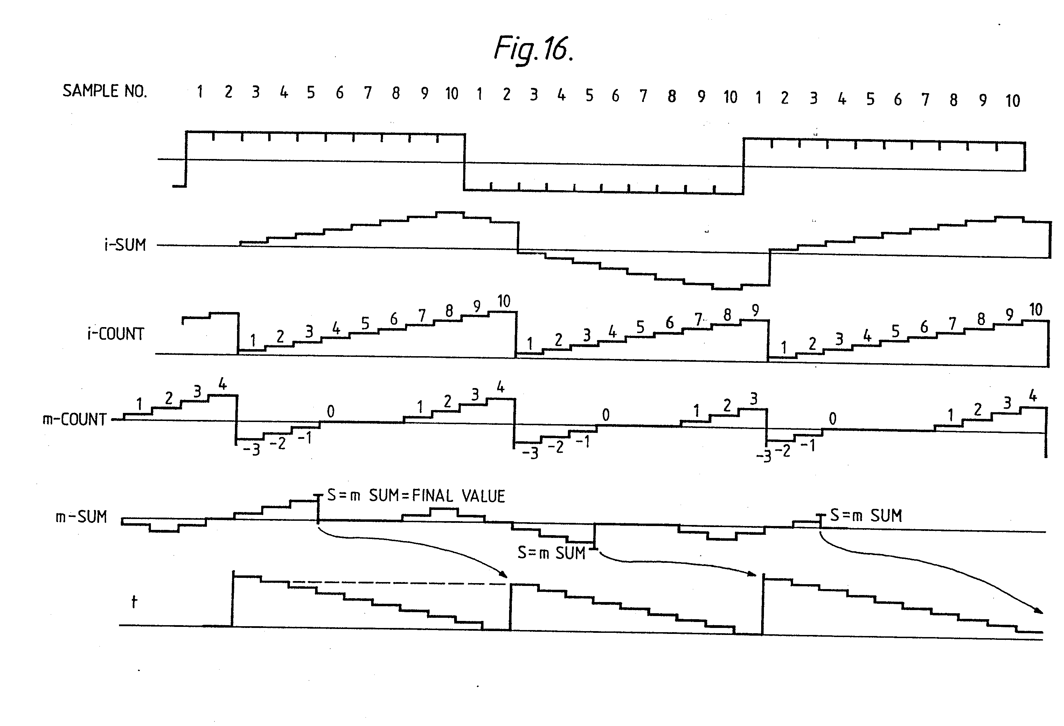

Figures 15 and 16 are explanatory timing diagrams relating to the algorithm of Figure 10;

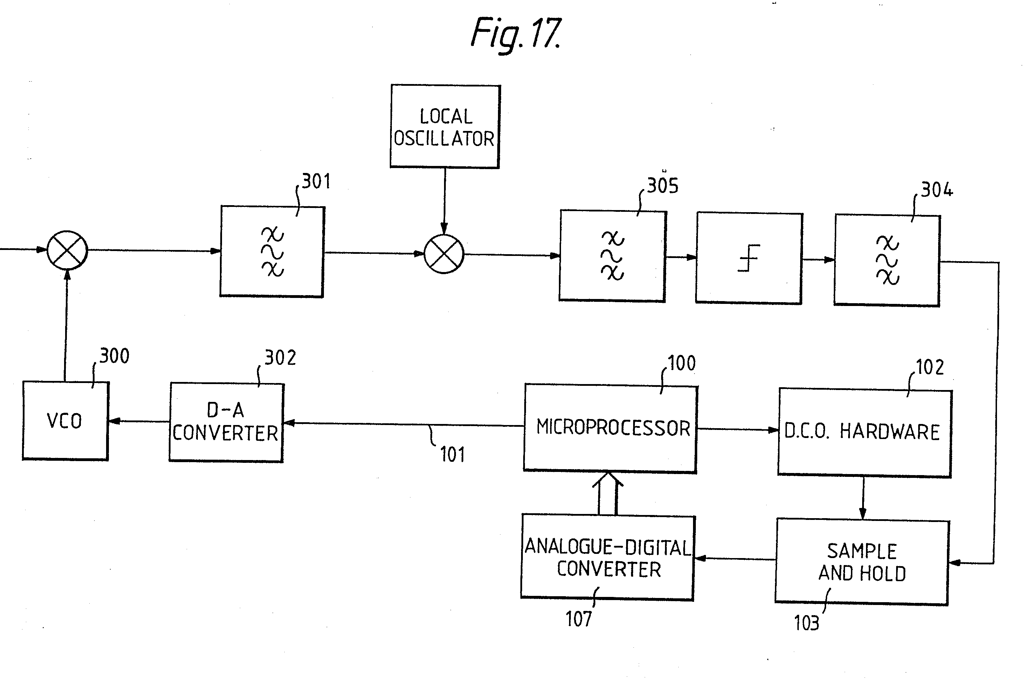

Figure 17 is a block schematic diagram of a demodulator modified to counteract frequency skew which occurs in satellite communications systems; and

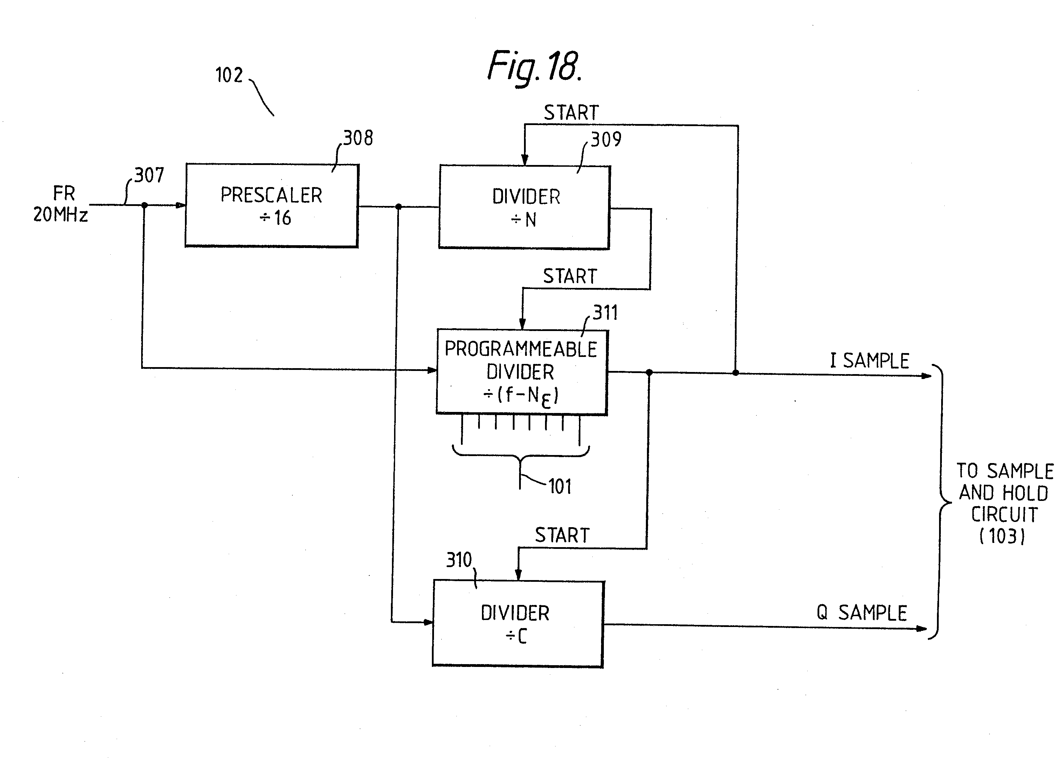

Figure 18 is a block schematic diagram of a practical implementation of digitally controlled oscillator hardware for the demodulator of Figure 1.

A known variation of an analogue suppressed carrier synchronisation loop known as a Costas loop is shown for MSK at the left of Figure 6 to which reference is now made.

A voltage controlled oscillator (VCO) 1 is controlled to oscillate at the same frequency as the carrier of a modulated signal received at an input 2. After filtering by a filter 1' the modulated signal is converted to a baseband signal by a mixer 3 with the output signal of the oscillator 1 and is similarly converted to a baseband signal by a mixer 4 with the output signal phase shifted by 90° by a phase shift circuit 5. The two baseband signals (referred to respectively as $I$ (in-phase) and $Q$ (Quadrature) signals appear at respective outputs 6 and 7. The signals at the outputs 6 and 7 may be applied to an "integrate and dump" circuit (not shown) to recover digital information. The dump timing which is recovered by a further loop (shown to the right of Figure 6) appears at outputs 8 and 9, in the case of the Q signal, the timing signal being phase shifted by 90° by a respective phase shift circuit 10.

The carrier oscillator control voltage is derived by combining the I and Q signals after filtering by respective arm filters 11 and 12. The I and Q signals present after filtering are mixed by a mixer 14 and combined with a clock signal from a clock voltage control oscillator 16 in a mixer 15. The signal from the mixer 15 is applied to the loop filter 1' and thence to the VCO 1.

The timing signals at the outputs 8 and 9 are locked to the incoming signal in the second phase-locked loop in which the I and Q signals are squared 17, 18 and mixed together, 19 with a control signal derived from the quadrature channel clock 20. Squaring of the channel data results in the timing signals being at twice the data rate. Thus before being output, the frequency of the clock signals is halved by respective dividers 21 and 22.

Referring also to Figures 2 and 3 when assembled as shown in Figure 5A, the Costas loop of Figure 6 may be digitized as shown. To assist understanding those parts of the algorithm which correspond to integers of the analogue costas loop are similarly designated with the addition of a prime (').

The received signal at the input 2' may be represented as:-

$$S(t) = y_i \, \text{Cos} \, (\omega ct + y_i \oplus y_q \, \frac{\pi t}{2t})$$

$$= y_i \, \text{Cos} \, \omega ct \, \text{Cos} \, \frac{\pi t}{2T} + y_q \, \text{Sin} \, \omega ct \, \text{Sin} \, \frac{\pi t}{2T}$$

In the multipliers (3', 4') the cosine and sine respectively of the regenerated carrier references from a controlled oscillator function 1' gives in the I channel:-

$$y_i \, \text{Cos} \, (\omega ct + y_i \oplus y_q \, \frac{\pi t}{2T}) \, \text{Cos} \, \omega ct.$$

and in the Q channel

$$yi \; Cos \; (\omega ct + yi \oplus yq \; \frac{\pi t}{2T} ) \; Sin \; \omega ct.$$

after filtering at 11' and 12' these produce respectively:-

$$yi \; Cos \; \frac{\pi t}{2T}$$

and $$yq \; Sin \; \frac{\pi t}{2T}$$

The modulating data may now be recovered by respective integrate and dump functions 20, 21 in accordance with the following equations:

for the I channel:-

$$yiT = \int_{-T}^{+T} (yi \; Cos \; \frac{\pi t}{2T} ) \; Cos \; \frac{\pi t}{2T} \; dt$$

and for the Q channel:

$$yqT = \int_{0}^{2T} (yq \; Sin \; \frac{\pi t}{2T} ) \; Sin \; \frac{\pi t}{2T} \; dt$$

It is here noted that $Cos \; \pi t/2T$ and $Sin \; \pi t/2T$ are the recovered clock references.

The identities set out above are of course related to optimum demodulation in which the recovered carrier references are exact. There may be some phase error ($\phi c$) in the carrier reference thus the regenerated carrier references may be more accurately shown for the two channels as:-

$$ri \; (t) = Cos \; (\omega ct + \phi c)$$

and $$rq \; (t) = Sin \; (\omega ct + \phi c)$$

Considering only the I channel after multiplication (3') and filtering (11')

$$Ifr = \frac{yi}{2} \; Cos \; (\phi c - yi \oplus yq \; \frac{\pi t}{2T} )$$

-7-

Similarly the Q channel gives

$$Q_{fr} = yi/2 \; Sin \; (\emptyset c - yi \; \oplus \; yq \; \frac{\pi t}{2T})$$

Multiplying these together (14') gives

$$0.125 \; Sin \; (2\emptyset c - yi \; \oplus \; yq \; \frac{\pi t}{T})$$

This is multiplied by the imperfect timing reference $Cos \; (\frac{\pi t}{T} + \emptyset s)$, the derivation of which is explained hereinafter, (15') and results as

$$\frac{1}{16} \left[ Sin \; (2 \; \emptyset c - yi \oplus yq \; \frac{\pi t}{T} - \frac{\pi t}{T} - \emptyset s) + Sin \; (2 \; \emptyset c - yi \oplus yq \; \frac{\pi t}{T} + \frac{\pi t}{T} + \emptyset s) \right]$$

which when $yi \; \oplus \; yq = 1$ gives a low pass component of

$$\frac{1}{16} \; Sin \; (2 \; \emptyset c + \emptyset s),$$

and when $yi \; \oplus \; yq = -1$ gives a low pass component of

$$\frac{1}{16} \; Sin \; (2 \; \emptyset c - \emptyset s)$$

Thus the composite low pass component may be expressed as

$$\frac{1}{16} \; Sin \; (2 \; \emptyset c + yi \; \oplus \; yq \; \emptyset s)$$

A loop filter 22 removes the data dependant term leaving an error term of

$$Error \; Value \; (C) = \frac{1}{16} \; Sin \; 2 \; \emptyset c \; Cos \; \emptyset s$$

The timing reference $Cos \; (\frac{\pi t}{T} + \emptyset s)$ is derived from

$If^2 (18') - Qf^2 (17')$ which gives

$$\frac{1}{4} \; (Cos^2 \; (\emptyset c - yi \; \oplus \; yq \; \frac{\pi t}{2T}) - Sin^2 \; (\emptyset c - yi \oplus yq \; \frac{\pi t}{2T}))$$

which simplifies to

$$\frac{1}{4} \; Cos \; (2 \; \emptyset c - yi \oplus yq \; \frac{\pi t}{T})$$

This when multiplied (23) by the timing oscillator 16'

output sine $(\text{Sin } \frac{\pi t}{T} + \emptyset s)$ gives $\frac{1}{8} \left[ \text{Sin } (\frac{\pi t}{T} + \emptyset s - 2 \emptyset c + y_i \oplus y_q \frac{\pi t}{T}) + \text{Sin } (\frac{\pi t}{T} + \emptyset s + 2 \emptyset c - y_i \oplus y_q \frac{\pi t}{T}) \right]$

A symbol loop filter representation 24 reduces this term to

Error Value (s) = $\frac{1}{8}$ Sin $\emptyset$s Cos 2 $\emptyset$c

Thus this Error Value (s) may be seen to be interdependent with the carrier phase error value (c) of $\frac{1}{16}$ Sin 2 $\emptyset$c Cos $\emptyset$s.

For small phase errors ($\emptyset$s and $\emptyset$c approaching zero)

Error Value (c) $\simeq$ 1/16 Sin 2 $\emptyset$c

and      Error Value (t) $\simeq$ 1/8 Sin $\emptyset$s

The data signals $y_i$ and $y_q$ are obtained from the arm signals If and Qf (assuming that the generated carrier reference is in lock, therefore $\emptyset$c = 0) from the equations:

If = $y_i$/2 Cos $(-y_i \oplus y_q \frac{\pi t}{2T})$

= $y_i$/2 Cos $\frac{\pi t}{2T}$

and Qf = $y_i$/2 Sin $(- y_i \oplus y_q \frac{\pi t}{2T})$

= $y_q$/2 Sin $\frac{\pi t}{2T}$

These are premultiplied by the recovered timing reference signals and applied to the integrate and dump circuit 20, 21 as for recovery in the optimum procedure.

The algorithm of Figures 2 and 3 as described and shown may be implemented in a microprocessor. However, even at very low frequencies the microprocessor is required to be very fast. In one practical example tested taking 5,200 samples of the input signal per second the microprocessor was required to operate at only twenty eight microseconds per multiplication to achieve real-time processing of the incoming signal.

It was realised that since the whole of the incoming signal was not required to achieve optimum data recognition that if some of the functions could be incorporated in a hardware unit so that the signal was pre-sampled, then a slower microprocessor could cope with the principal work of carrier, timing and data recovery.

Thus the inventor applied a technique known as sub-Nyquist synchronous sampling to the algorithm of Figures 2 and 3 to produce the algorithm of Figures 4 and 2 when assembled as shown in Figure 5B. Thus referring to Figures 4 and 2 the timing recovery is identical with the timing recovery of Figures 2 and 3. Carrier error correction is achieved in a similar manner except that a scaled control signal is supplied from the carrier recovery function 22 to a hardware digitally controlled oscillator which is discussed hereinafter.

The demodulator equations of the algorithm are as follows:-

$$\text{Øosk} = 2 \, \omega s \, (kTsa + \underset{k}{\overset{\leq}{}} dt) + KvsTsa \underset{k}{\overset{\leq}{}} y3_i$$

$$\text{Cos Ø os} = \text{Cos (Øosk)}$$

$$\text{Sin Øos} = \text{Sin (Øosk)}$$

$$\text{Cos Øos/2} = \text{Cos (Øosk/2)}$$

$$\text{Sin Øos/2} = \text{Sin (Øosk/2)}$$

$$y3_k = y3_{k-1} + A_4 y2_k - A_5 y2_{k-1}$$

$$y2_k = y1_k \, \text{Sin Øos}$$

$$y1_k = i_k^2 - q_k^2$$

$$x1_k = i_k q_k$$

$$x2_k = x1_k \, \text{Cos Øos}$$

$$x3_k = x3_{k-1} + A_0 x2_k - A_1 x2_{m-1}$$

$$t_{k+1} = t_k + T_{sa} - A_7 x3_k$$

$$yio = \underset{2T}{\overset{\Sigma}{}} i_k \, \text{Cos Ø}_{os}/2$$

$$yqo = \underset{2T}{\overset{\Sigma}{}} q_k \, \text{Sin Ø}_{os}/2$$

$$\ell_k = y_{1k} \, \text{Cos } \omega os$$

$$C_k = C_{k-1} + A_6 \, (\ell_k - C_{k-1})$$

where K = sample number

Tsa = sample period

T = bit period

kvs = symbol loop VCO gain

$\omega s$ = symbol shaping frequency ($\pi/2T$)

kvc = carrier loop DCO gain

Ax = various filter coefficients

These equations are not in the most suitable form for implementation in a microprocessor and have therefore been re-arranged to give the following equations with some variables re-named;

$U = \omega osk$,    $yyang = kvs \, Tsa \, y_{3k}$,    $dt1 = A_7 x_{3k}$

$x = x_{2k}$,    $y = y_{2k}$, $\omega 1 = y_{1k}$, $\omega 2 = x_{1k}$

The microprocessor implemented equations are

$U \quad := U + 2\omega sTsa + 2\omega s \, dt + yyang$

$\text{Sin } U := \text{Sin } (U)$

$\text{Cos } U := \text{Cos } (U)$

$\text{Sin } U/2 := \text{Sin } (U/2)$

$\text{Cos } U/2 := \text{Cos } (U/2)$

$yyang := yyang - kvsTsa \, A_5 y$

$\omega_1 := i^2 - q^2$

$y := \omega 1 \, \text{Sin } U$

$\ell := \omega 1 \, \text{Cos } U$

$C := C + A_6 \, (\ell - C)$

$yyang := yyang + kvsTsaA_4 y$

$dt1 := dt1 + A_7 A_1 x$

$\omega_2 := iq$

$x := \omega_2 \text{ Cos U}$

$dtl := dtl - A_7 A_0 x$

$dt := dtl$ rounded to most significant 8-bits

$yio := yio + i \text{ Cos U}/2$

$yqo := yqo + q \text{ Sin U}/2$

The result dt is added to a constant f for fine tuning the digitially controlled oscillator and output thereto.

The constants in the above expressions are as follows,

$A_5 = \gamma_4/\gamma_3$ ) symbol loop filter

$A_4 = (Tsa + \gamma_4)/\gamma_3$ ) $F(s) = (1 + s\gamma_4)/s\gamma_3$

$A_1 = \gamma_2/\gamma_1$ ) carrier loop filter

$A_0 = (Tsa + \gamma_2)/\gamma_1$ ) $F(s) = (1 + s\gamma_2)/s\gamma_1$

$A_7 = \dfrac{kvc\ Tsa^2}{2m\pi}$ DCO equation.

$A_6 = Tsa/\gamma_6$ a.g.c. filter

$F(s) = 1/(1 + s\gamma_6)$

The preceding equations are implemented in a microprocessor appropriately scaled. A comprehensive analysis of wordlengths and variable ranging has revealed the following scaling as appropriate.

$6.3 \times 10^{-5} \leqslant U \leqslant \pi$  $\Rightarrow$  32 - bits

$2.5 \times 10^{-10} \leqslant yyang \leqslant 0.25$  $\Rightarrow$  32 - bits

$1.1 \times 10^{-11} \leqslant dtl \leqslant 5.5 \times 10^{-6}$  $\Rightarrow$  32 - bits

$2.5 \times 10^{-3} \leqslant x \leqslant (1.1)^3$  $\Rightarrow$  16 - bits

$2.5 \times 10^{-3} \leqslant y \leqslant (1.1)^3$  $\Rightarrow$  16 - bits

$\omega 1, \omega 2, c, l$  16 - bits

$dt, f$  8 - bits

-12-

Sin U, Cos U, Sin U/2, Cos U/2          8 - bits

i,q          8 - bits

The above give successful loop operation for carrier loop bandwidths greater than or equal to one herz (nominal) and symbol loop bandwidths to 0.1 herz.

Loop bandwidths for the symbol and carrier loops are determined using the following procedure;

for small phase errors, damping factor, $\zeta$ , and natural frequency of the carrier and symbol loops are given by, respectively,

$$\left. \begin{array}{l} \zeta c = \omega_{nc}\,\gamma_2/2 \\[2em] \omega_{nc} = \sqrt{\dfrac{KvcKdc}{\gamma_1}} \end{array} \right\} \text{ carrier loop}$$

$$\left. \begin{array}{l} \zeta s = \omega_{ns}\,\gamma_4/2 \\[2em] \omega ns = \sqrt{\dfrac{KvsKds}{\gamma_3}} \end{array} \right\} \text{ symbol loop}$$

For both loops, the loop configurations give rise to phase detector gains of

$$Kdc = Kds = 0.125$$

Kvs/c are set at 1000 rads/volt.

Loop noise bandwidth is calculated using

$$B_L = \frac{\omega n}{2}\left[\zeta + \frac{1}{4\zeta}\right] \text{ (Hz)}$$

The damping factor is set to 0.7 but may be programmed to any desired value.

A flow chart showing these operations as carried out by the microprocessor is shown in Figures 8 and 9 when assembled as shown in Figure 7.

It is here noted that on exit from the program in Figure 9 the microprocessor will loop back to the commencement of the program of Figure 8 to await a further 'I' input.

Referring now to Figure 1 the apparatus for implementing the invention comprises a microprocessor 100 which is programmed to conform with the flow chart of Figures 8 and 9. The scaled carrier oscillator control signal is returned on an output 101 to digital clock hardware 102 arranged to control a sample and hold circuit 103.

An incoming signal on a lead 104 is limited by a hard limiter 105 and filtered by a coarse filter 106 before being passed to the sample and hold circuit 103.

Thus at periodic intervals the analogue value of the incoming signal is held under control of the digital clock hardware 102 and an analogue-digital convertor 107 is enabled to pass a digital representation of the signal sample to be processed to the microprocessor 100.

The microprocessor demodulates the samples as hereinbefore described and outputs the I and Q channel data on leads 108 and 109 respectively.

To facilitate monitoring of the microprocessor function an output may be provided to display circuitry 110 which may be an oscilloscope for example.

A suitable microprocessor for use as the micro-processor 100 is a 6 MHz Zilog Z 8000 16-bit micro-processor which has been found satisfactory for operation using a seven kiloherz intermediate frequency, a digital clock reference of twenty Megaherz for the digitally controlled oscillator and a one kiloherz sampling rate.

A 20 MHz reference gives a frequency quantization (qf) in the digitally controlled oscillator of 0.35 herz,

-14-

carrier loop bandwidths down to one herz may be accommodated whilst the one kiloherz sampling rate is satisfactory for minimum-shift keyed data rates of up to 200 baud. At these data rates the 6 MHz Zilog Z 8000 is loaded for between 60% and 70% of the time.

A 1200 Hz sampling rate is within the capability of the microprocessor and would satisfactorily accommodate rates of up to 300 Baud.

Referring now to Figures 1 and 10 the microprocessor 100 may be programmed to demodulate binary and quadrature phase shift keyed signals (BPSK/QPSK) using the algorithm of Figure 10.

The algorithm comprises a known carrier tracking loop, a known clock recovery loop and data recovery operation. The sub-Nyquist sampling technique as hereinbefore described with reference to figures 4 and 2 is used to provide in-phase signal and quadrature phase (for QPSK only) signal samples.

In the QPSK mode the in-phase and quadrature phase signals are proportionally combined using two mixers 201, 202 and a summer 203 to provide a signal $x_2$ for application by way of a loop filter 204. The loop filter 204 is identical to the loop filter of the algorithm of Figure 4 hereinbefore described the output signal of which is applied to the digitally controlled oscillator (DCO) hardware 102 in the same manner.

The in-phase signal samples are processed by a digital transition tracking loop which comprises program implemented in-phase and mid-phase sum-and-dump elements 205, 206, a limiter 207 which acts as a decision element for the in-phase data and a mid-phase delay element 208. The in-phase and mid-phase values are mixed in a mixer 209 to control a program implemented digitally controlled oscillator (DCO) 210. The output of the digitally controlled oscillator 210 is used to provide a dump indication to the sum-and-dump element 205, 206 and (for QPSK) also provides a dump indication to a corresponding sum-and-dump element 211. The DCO 210 additionally provides timing (immediately before dump) of the sum from the sum-and-dump elements 205, 206 and 211 as indicated by the switch elements 213-215.

It will be appreciated that the values to be mixed by the multiplier 209 (S & I) must be of correct relative polarity. Accordingly the I bit polarity is corrected by an element 216 in which

$$I = \frac{i \text{ bit old} - i \text{ bit}}{2}$$

It will be appreciated that $x_2$ applied to the loop filter 204 for QPSK (i.e. with switch element 217 in the operated position) is given by

$$x_2 = k - m$$

whilst for BPSK with k effectively tied to zero

$$x_2 = -m$$

The output of the algorithm for BPSK is taken from the limiter 207 and for QPSK is taken from the limiter 207 and from a corresponding limiter/decision element 212 in the quadrature arm of the algorithm. The outputs represent a non-return to zero (NRZ) pulse train which corresponds to the modulated data of the input signal.

The digitisation of the algorithm of figure 10 may be seen clearly from the flow chart of figures 12 to 15. In particular it will be noted that Figure 12 represents the carrier tracking algorithm for both QPSK and BPSK signals. As previously described with reference to figure 8 and MSK, the I and Q samples may be read sequentially from the analogue-to-digital converter (107 of Figure 1). However, for increased timing efficiency of the microprocessor 100 the I and Q samples may be read in simultaneously as a sixteen bit word of two eight-bit bytes. Simultaneous reading of the samples is assumed for the flow chart of Figure 12.

In the microprocessor 100 the carrier tracking variables are resolved as follows:-

$i$ & $q$   eight bits;

$k$ & $m$   eight bits;

$x_2$ & "$x_2$old"   sixteen bits;

$dtl$   thirty-two bits;       and

$A_1$, $A_2$, $A_7$ & $f$ sixteen bits

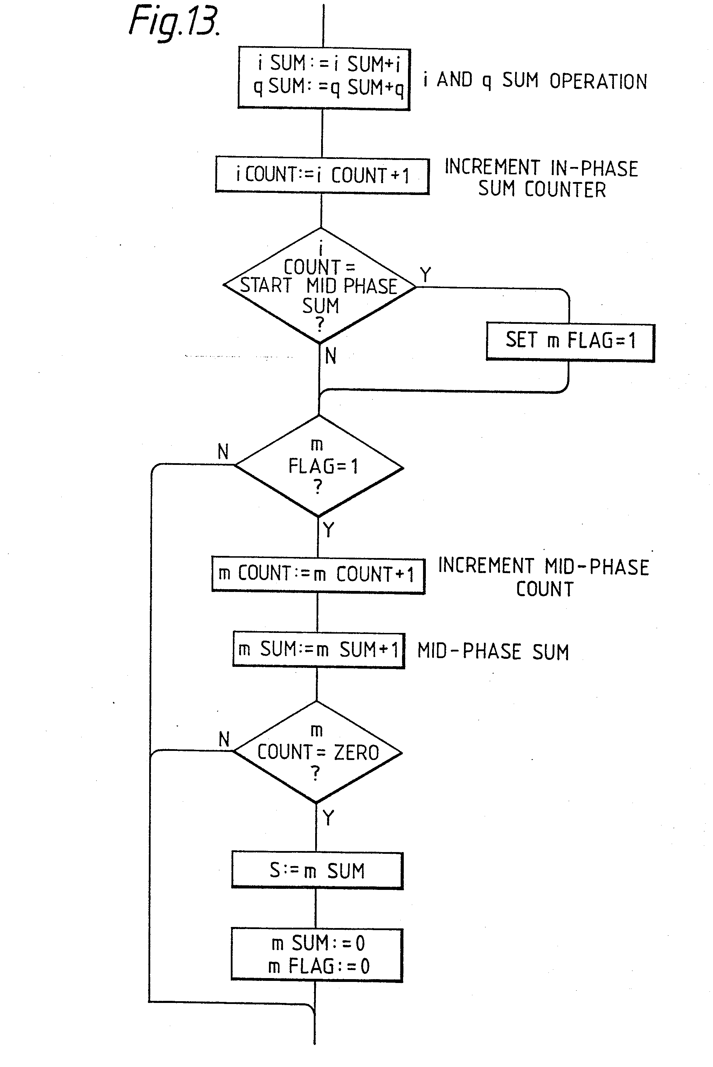

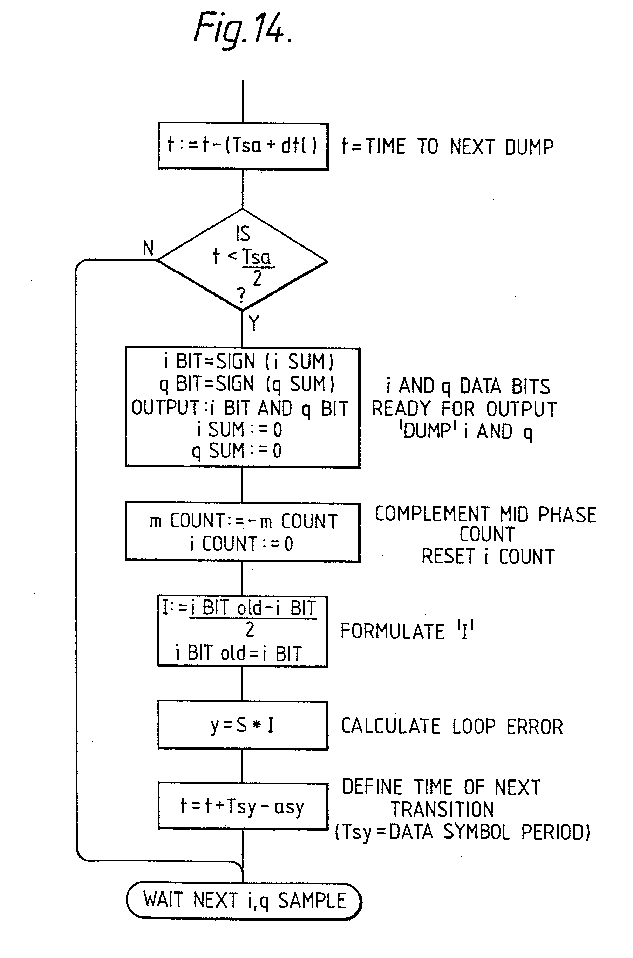

The clock tracking loop is digitised as shown in figures 13 and 14. As will be appreciated from the description of the algorithm of Figure 10 the clock tracking loop uses the same in-phase samples (i) as are used in the carrier tracking loop. The function of the variables in the clock tracking loop are illustrated in figure 15 to which reference is now also made.

Figure 15 shows the effect of perfect synchronisation in which as may be seen the mid-phase sum is formed from an equal number of samples on each side of a transition. Thus, for perfect synchronisation, when the m-count is incremented to zero the value of m-sum is also zero and the loop generates a zero error count which does not alter the timing of the DCO (210 of figure 10).

However if the DTTL is not synchronised, as demonstrated by reference to figure 16, when m-count increments to zero, m-sum has a positive or negative value which generates an error value for 'S'. This error value when multiplied by I (multiplier 209 of figure 10) to account for positive, negative or zero transition is used to adjust the 't' variable of the DCO 210 which specifies the time to the next expected transition. As will be seen from figure 16 significant adjustments to 't' may be effected, in the case of the second examplary data transition 't' being reduced from ten to nine samples only. The i-count and m-count samples are accordingly adjusted to be one sample interval closer to perfect synchronisation. The rate of correction may be controlled using the gain parameter 'As' as shown in Figure 14.

Whilst the flow chart shows only a first order DTTL it will be realised that a second order loop may be used if variable 'y' is processed using a clock loop filter of the type previously described for MSK.

The sub-Nyquist sampling MSK/BPSK/QPSK demodulator hardware of Figure 1 requires modification prior to use in, for example, satellite communications systems. Such a modification is necessary because the local oscillator, satellite frequency and Doppler frequency drifts in combination cause skew signal transmissions through IF filters.

Thus, referring to Figure 17 the demodulator may be reconfigured in a "long loop" to overcome such problems. In this arrangement a control output from the microprocessor 100 is provided to control a carrier frequency VCO 300 prior to band pass filtering of an incoming signal. Thus the signal through band pass filter 301 is of a substantially constant and known frequency and passes through the filters 301 and 305 symmetrically once it is acquired.

The control output from the microprocessor 100 is that previously used to control the DCO hardware (102 of Figure 1), the DCO being fixed tuned to the centre frequency. In this configuration 'dt' is not rounded to eight bits, a full twelve bit word being output for application by way of a digital to analogue convertor 302 to the VCO 300. Loop gain may be adjusted by altering parameter A7 of the flow charts previously maintained.

In the long loop configuration the demodulator has sufficient resolution for tuning over a range of plus or minus two kilohertz at the VCO 300.

For 2400 bit/sec QPSK or 1200 bit/sec BPSK the filter values are: for the filter 301, ten kilohertz, filter 305, four kilohertz, and for filter 304, three kilohertz.

Referring now to Figures 1 and 18, a practical circuit for the DCO hardware 102 is supplied at an input 307 with a reference frequency signal (Fr) of twenty megahertz. Fr is divided by 16 by a prescaler circuit 308 and then by 'N' by a hard wired divider 309.

The divider 309 triggers a software controlled divider 311 which receives the eight bit control word from the microprocessor 100.

The divider 311 divides Fr by $K-N_E$ to determine the 'I' sample time which is passed to the sample and hold circuit 103. The I sample time output triggers a third divider 310 which receives $\frac{Fr}{16}$ from the prescaler 108 which divides by a fixed (hardwired) ratio to implement a quarter cycle delay to output the 'Q' sample time signal.

Claims.

1.     A demodulator for recovering digital data from a
frequency-shift-keyed (FSK) or phase-shift-keyed (PSK)
modulated signal characterised in that an incoming signal
is applied to an input of a microprocessor (100) which is
programmed to subtract a mathematical function (1')
representative of the carrier signal from the incoming
signal to provide a baseband signal containing the data
to be recovered, said microprocessor(100) also being
arranged to derive from said baseband signal a value representative of the apparent phase difference between the
actual carrier and said mathematical function and to vary
said mathematical function in dependance upon said derived
value, and said microprocessor (100) is further arranged
to recover the digital data from said baseband signal and
to derive timing signals from said baseband signal in
respect of said recovered data and to provide signals
at an output (108, 109) representing the recovered data
and timing related thereto.

2.     A demodulator as claimed in Claim 1 further
characterised in that said microprocessor (100) is
arranged to provide signals at a first output (108)
representing the data and timing for data (if any) which
is in-phase with the carrier signal and to provide signals
at a second output (109) representing the data and timing
for data (if any) which is in quadrature phase with the
carrier signal.

3.     A demodulator as claimed in Claim 2 further
characterised in that the data at each of the outputs
(108, 109) is in respect of a plurality of independant
data channels.

4.     A demodulator as claimed in Claim 1, Claim 2 or
Claim 3 further characterised in that a sampling circuit
(103) is controlled by a variable function derived by the
microprocessor (100) to sample an incoming     signal at
periodic intervals, said circuit being arranged to hold a
value representative of the incoming signal at the instant
of sampling and to provide a signal to the microprocessor (100) representing the value held.

5. A demodulator as claimed in Claim 4 further characterised in that the sampling circuit (103) samples in the manner known as sub-Nyquist sampling.

6. A demodulator as claimed in Claim 4 or Claim 5 further characterised in that the control signals from the microprocessor (100) control the frequency of an oscillator (102) which in turn controls the sampling circuit (103).

7. A demodulator as claimed in Claim 6 further characterised in that the oscillator (102) is a digitally controlled oscillator.

8. A demodulator as claimed in Claim 6 or Claim 7 further characterised in that the sampling circuit (103) is an analogue sample and hold circuit.

9. A demodulator as claimed in Claim 1, Claim 2 or Claim 3 further characterised in that a sampling circuit (103) is controlled by a function derived by the microprocessor (100) to sample an incoming signal at periodic intervals and to provide a signal to the microprocessor (100) representing the value held and an oscillator (300) is responsive to signals from the microprocessor (100) to vary the synthesised carrier frequency mixed with an incoming signal prior to sampling.

10. A demodulator as claimed in Claim 7 or Claim 8 further characterised in that the digitally controlled oscillator (102) comprises a first divider (309) arranged to divide an input reference frequency (Fr) by a first fixed function (N) and to provide an output signal to cause a second divider (311) to divide the input reference frequency (Fr) by a variable function ($f-N_c$) determined by the microprocessor (100) to provide a first sampling signal to the sampling circuit (103) and to provide a start signal to a third divider (310) arranged to divide the reference frequency (Fr) by a further fixed function (C) and to provide a second sampling signal to the sampling circuit (103).

*Fig.1.*

*Fig.6.*

Fig.2.

Fig.3.

## Fig.4.

$$t_{R+1} = t_R + T_{s\alpha} + a_7 x_{3R}$$

$$x_{3R} = x_{3R-1} + a_0 x_{3R} + a_1 x_{2R-1}$$

$$\frac{\pi}{2\omega_s}$$

SCALING

101

$1''$

22

$15'$

$14'$

COS

Fig.5A.

| Fig.3. | Fig.2. |
|--------|--------|

Fig.5B.

| Fig.4. | Fig.2 |
|--------|-------|

0118214

*Fig.7.*

*Fig.8.*

| |
|---|
| Fig.8 |
| Fig.9. |

```
WAIT I
  │
  ▼
RECEIVE
I INTERRUPT
  │
  ▼
INPUT i
  │
  ▼
WAIT Q
  │
  ▼
RECEIVE
Q INTERRUPT
  │
  ▼
INPUT q
  │
  ▼
```

$U := V + 2\omega sTsa + 2\omega sdt + yyarg$

SIN AND COS $U_1$
+ SIN AND COS $\dfrac{U}{2}$
LOOK UP TABLE

$yyarg := yyarg - KvsTsaQ_5 y$

$Wi = i^2 - q^2$

$y = Wi\ SIN\ u$

$l = Wi\ COS\ u$

**0118214**

## Fig.9.

$C := C + ai\ (l - C)$

OUTPUT C    (NOTE: A.G.C. VALUE)

$dtl := dtl - a_7 a_1 x$

$W_2 = iq$

$x = W_2\ \cos U$

$dtl := dtl + a_7 a_2 x$

OUTPUT $K - dtl$    (NOTE: ROUNDED TO 8 BITS)
(NOTE: O/P TO D.C.O)

$yio := yio + i\ \cos \dfrac{U}{2}$

$yqo := yqo + q\ \sin \dfrac{U}{2}$

SIN U = ZERO CROSSING ?

-VE CROSSING        +VE CROSSING

NO

OUTPUT yio DATA BIT        OUTPUT yqo DATA BIT

$yio = \emptyset$        $yqo = \emptyset$

Fig.10.

# Fig.11.

| |
|---|
| Fig.12. |
| Fig.13. |
| Fig.14 |

# Fig.12.

START: I AND Q
SAMPLES READY

READ: I AND Q
SAMPLES FROM
A/D CONVERTER

$k = i + \text{sgn}(q)$
$m = q + \text{sgn}(i)$

$x_2 \text{ old} = x_2$
$x_2 := k*(QPSK) - m$

QPSK = 1 FOR QPSK
= 0 FOR BPSK

$dtl := dtl - a_7 a_1 x_2 \text{ old} + a_7 a_2 x_2$

OUTPUT TO D.C.O. | OUTPUT: $f - dt$

**0118214**

*Fig.13.*

| | |
|---|---|
| i SUM := i SUM+i<br>q SUM := q SUM+q | i AND q SUM OPERATION |
| i COUNT:=i COUNT+1 | INCREMENT IN-PHASE<br>SUM COUNTER |

i COUNT = START MID PHASE SUM ?  → Y → SET m FLAG=1

N

m FLAG=1 ? → N / Y

| m COUNT:=m COUNT+1 | INCREMENT MID-PHASE<br>COUNT |
| m SUM:=m SUM+1 | MID-PHASE SUM |

m COUNT = ZERO ? → N / Y

S:= m SUM

m SUM:=0<br>m FLAG:=0

# Fig.14.

$$t := t - (Tsa + dtl)$$    t = TIME TO NEXT DUMP

IS
$$t < \frac{Tsa}{2}$$
?

N

Y

i BIT = SIGN (i SUM)
q BIT = SIGN (q SUM)
OUTPUT : i BIT AND q BIT
i SUM := 0
q SUM := 0

i AND q DATA BITS
READY FOR OUTPUT
'DUMP' i AND q

m COUNT := -m COUNT
i COUNT := 0

COMPLEMENT MID PHASE
COUNT
RESET i COUNT

$$I := \frac{i \, BIT \, old - i \, BIT}{2}$$
i BIT old = i BIT

FORMULATE 'I'

$$y = S * I$$

CALCULATE LOOP ERROR

$$t = t + Tsy - asy$$

DEFINE TIME OF NEXT
TRANSITION
(Tsy = DATA SYMBOL PERIOD)

WAIT NEXT i,q SAMPLE

Fig.15.

SAMPLE NO. (= i-COUNT)

i SAMPLES (10 PER DATA BIT)

DATA BIT NO.1 = +1   DATA BIT 2 = −1   DATA BIT 3 = −1

i-SUM

i-COUNT

m-COUNT

m-SUM (MID-PHASE SUM)

S := m-SUM = 0   S := m-SUM = 0

THIS VARIABLE REACHING ZERO CAUSES i-COUNT TO BE RESET, ETC.

11/14

0118214

Fig.16.

13/14

Fig.17.

Fig.18.